Europäisches Patentamt ·

European Patent Office

Office européen des brevets

(11) Veröffentlichungsnummer: **0 204 351**

A2

## (12) EUROPÄISCHE PATENTANMELDUNG

(21) Anmeldenummer: **86200003.1**

(22) Anmeldetag: **06.01.86**

(51) Int. Cl.⁴: **B 65 G 51/03**

(30) Priorität: **06.04.85 DE 3512585**

(43) Veröffentlichungstag der Anmeldung:
**10.12.86 Patentblatt 86/50**

(84) Benannte Vertragsstaaten:
**AT BE CH DE FR GB IT LI LU NL SE**

(71) Anmelder: **Fa. Toma
Buderusplatz 1
D-6330 Wetzlar(DE)**

(72) Erfinder: **Frank, Helmut
Königsbergerstrasse 6
D-6333 Braunfels(DE)**

(54) Energiesparende Förderrinne für abfallähnliche Massengüter.

㊗ Beschrieben wird eine offene, pneumatische Förderrinne für Massenware mit energieverbrauchs-senkenden Abweisern. Die Förderrinne ist gedacht für Massenware, wie z.B. Stanzabfälle im innerbetrieblichen Transport. An ihrer oberen, offenen Seite werden schwach S-förmige abgewinkelte Abweiser (6) angebracht, die das nach oben austretend wollende Fördergas wieder nach unten drücken, sodaß dieses dem Fördergut einen zusätzlichen Schub erteilt und damit einen geringeren Luft- und Energieverbrauch bewirkt. Gleichzeitig werden einzelne kleine Teile daran gehindert, aus der Förderrinne herauszufliegen. Die Abweiser (6) werden in einem Winkelbereich zwischen 10 und 45° zur Förderbahn (4) und in einem Abstand voneinander zwischen 100 und 300 mm angebracht.

Auf diese Art wurde in einem ausgeführten Fall der Energieverbrauch um 68% gesenkt.

Beschreibung

Neben der pneumatischen Förderung von Schütt- und stückartigen Gütern in oben offenen Rinnen ist in der industriellen Herstellung die von Massenwaren, wie Drehspänen, Stanz-,
Spritzguß-, Folien- oder Papierabfällen zu deren zentraler
Sammlung und Weiterführung zur Wiederverarbeitung bekannt.
Das Problem hierbei ist, daß die einzelnen Stücke solcher
Massenwaren keineswegs immer gleich groß und schwer sind
und zudem nicht in regelmäßigem Fluß anfallen. Schließlich
gelingt es hierfür so typischen Stanzabfällen sich öfters
zu verhaken und so größere Pfropfen zu bilden, die die
Bahn verstopfen können, wenn die Luftleistung eben zu
schwach ist auch dieses Gewicht weiter zu fördern. Deswegen werden solche Förderanlagen in ihrer Luftleistung und
damit dauernden Energieverbrauch überdimensioniert, damit
so der Kunde keinen Grund zur Reklamation erhält. Daher
wird es aber auch leichten Abfallstücken erleichtert, nach
oben aus der Bahn zu fliegen. Um dies zu verhindern, wird
die Förderbahn in bestimmten Abständen teilweise abgedeckt,
was wieder Anlass zum Verhaken und Aufstauen geben kann.

Um diese Nachteile je nach Fördergut fast oder ganz zu vermeiden werden erfindungsgemäß in der oberen und offenen
Seite solcher Förderbahnen schwach S-förmige abgewinkelte
Abweiser (6) angebracht. Diese decken die volle Breite der
Förderrinne ab und bewirken mit ihrer schräg nach unten gerichteten Hauptfläche (7), daß die nach oben entweichend
wollende Luft wieder nach unten abgelenkt wird und so dem
Fördergut einen zusätzlichen Schub erteilt, gleichzeitig
aber auch leichtere Teile daran hindert, aus der Bahn herauszufliegen. Dieser Effekt gestattet mit geringer Luftmenge und damit erheblich verringertem Energieaufwand auszukommen.

Wesentlich ist, daß die gemeinsame Kante der waagrechten
Fläche (8) und der Hauptfläche (7) des in Förderrichtung
nachfolgenden Abweisers (6) genau über der Kante zwischen
der Hauptfläche (7) und der waagrechten Endfläche (9) des
vorhergehenden Abweisers angeordnet ist.

Der lichte Abstand der Abweiser voneinander liegt zwischen 100 und 300 mm.

So wurde eine Anlage zur Förderung von 900 kg/h Stanzabfällen, wie sie bei der Herstellung von Deckeln für Blechdosen anfallen, mit solchen Abweisern, die unter 35° geneigt sind, dermaßen verbessert, daß die 180 m lange Förderrinne statt vorher 45,6 kW Leistungsaufnahme nun nur noch eine von 14,4 kW hat. Dieses bedeutet eine Energieeinsparung von 68 %.

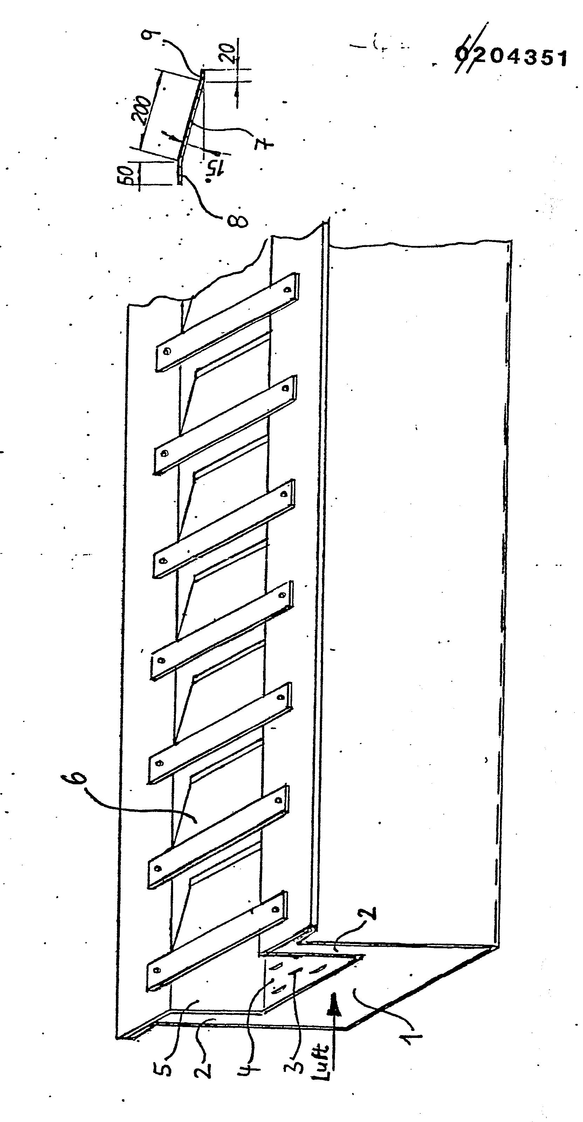

Patentansprüche

1. Anlage zur pneumatischen Förderung von Massenware, wie innerbetriebliche Abfälle mittels einer offenen Förderrinne oder ähnlichen Behältnisses, eines unterseitigen (1) oder auch zusätzlichen beidseitigen (2) Kanals und eines vorgeschalteten Ventilators oder Gebläses oder einer Mehrzahl von ihnen, die das Fördergas durch den Kanal und aus diesem durch zweckmäßige Öffnungen (3) im Boden (4) oder auch in den Seitenwänden (5) des Behältnisses in letzteres hinein zum Anheben und Transportieren der Massenware blasen, dadurch gekennzeichnet, daß in der offenen oberen Seite des Behältnisses schwach S-förmige abgewinkelte Abweiser (6) angebracht sind.

2. Anlage nach Anspruch 1, dadurch gekennzeichnet, daß die Abweiser (6) mit ihrer Hauptfläche (7) einen Winkel zwischen 10 und 45° zur Bodenfläche (4) der Förderrinne haben.

3. Anlage nach Anspruch 1-2 dadurch gekennzeichnet, daß die Abweiser in einem lichten Abstand zwischen 100 und 300 mm voneinander so angeordnet werden, daß die Kante zwischen der waagerechten Fläche (8) und der Hauptfläche (7) des in Förderrichtung nachfolgenden Abweisers (6) genau über der Kante zwischen der Hauptfläche (7) und der waagerechten Endfläche (9) des vorhergehenden Abweisers angebracht ist.

0 204351

Luft